# FASCICULE DE BREVET EUROPEEN

(11) **EP 1 598 222 B1**
(45) Date de publication et mention de la délivrance du brevet: **01.04.2009**
(21) Numéro de dépôt: 05009581.9
(22) Date de dépôt: 02.05.2005
(51) Int. Cl.: B60H 1/00

(54) **Dispositif d'accouplement pour système de chauffage, ventilation et/ou climatisation**
Kupplungsvorrichtung für eine Heizungs-, Lüftungs- und/oder Klimaanlage
Coupling device for a heating, cooling and/or ventilation system

(30) Priorité: 18.05.2004 DE 102004024677
(43) Date de publication de la demande: 23.11.2005
(73) Titulaire: Valeo Klimasysteme GmbH, 96476 Rodach (DE)
(72) Inventeur: Hentschel, Joachim, 96479 Weitramsdorf-Weidach (DE)
(74) Mandataire: Croonenbroek, Thomas Jakob

(56) Documents cités:
- EP-A- 0 812 713
- EP-A- 0 983 884
- DE-A1- 3 744 269
- FR-A- 2 803 055

## Description

La présente invention concerne un dispositif d'accouplement, en particulier pour les moyens de régulation d'un système de chauffage, de ventilation et/ou de climatisation d'un véhicule, comportant au moins deux éléments montés sur des axes différents, dont chacun présente au moins un segment d'engrènement prévu pour un engrènement alterné, et l'utilisation d'un tel dispositif d'accouplement dans un système de chauffage, de ventilation et/ou de climatisation d'un véhicule.

Pour la régulation et la commande des systèmes de chauffage, ventilation et/ou climatisation et/ou pour leurs moyens de commande du débit d'air, on utilise principalement, dans l'état de la technique, des dispositifs de régulation rotatifs qui sont montés de manière à pouvoir tourner dans l'un et l'autre sens afin de passer d'une position de refroidissement maximum à une position de chauffage maximum.

Un tel dispositif est connu du document EP-A-0 812 713.

La conception de ces systèmes de régulation exige de prendre en compte en particulier le toucher, le confort de maniement, les exigences d'encombrement, et le tracé de la courbe caractéristique du système de chauffage, ventilation et/ou climatisation à réguler. En outre, il s'est avéré qu'il était nécessaire de proposer des éléments de commande qui permettent également un actionnement dans un seul sens, mais qui correspondent également au tracé de la courbe caractéristique de l'élément à actionner.

La présente invention a donc pour objectif de proposer un dispositif d'accouplement qui satisfait aux exigences ci-dessus, en particulier un actionnement à démultiplication variable, la variabilité devant de préférence permettre également un changement de direction ou de sens de rotation.

Cet objectif est atteint par les caractéristiques des revendications indépendantes, les caractéristiques des revendications dépendantes décrivant des perfectionnements appropriés.

La présente invention propose en particulier un dispositif d'accouplement, selon revendication 1.

Les au moins deux segments d'engrènement d'au moins un élément, qui se trouvent sensiblement dans un plan et qui présentent chacun, segment angulaire par segment angulaire, l'un par rapport à l'autre, un écartement constant. Ces deux segments d'engrènement sont conçus de telle sorte que, dans la zone de transition d'un segment angulaire à un segment angulaire adjacent, un point de saut non différentiable est formé sur le tracé du segment d'engrènement, la surface correspondante de l'autre élément pouvant également être conçue avec des points de saut de ce type. Outre le point de saut, il est également possible de prévoir une discontinuité.

Dans ce mode de réalisation, les deux axes des éléments peuvent être prévus pour être stationnaires. Une autre solution consiste à monter au moins un axe de façon mobile, ce qui offre la possibilité de concevoir sous forme continue le segment d'engrènement de l'élément correspondant au segment d'engrènement comportant les points de saut de l'autre élément, dans la mesure où dans ce cas, l'axe de l'élément correspondant est décalé par rapport aux points de saut de l'autre élément. Ceci peut par exemple être réalisé simplement par un montage élastique d'un des axes.

Les écartements différents des segments d'engrènement par rapport aux axes des éléments permettent de manière simple, pour un actionnement et/ou une vitesse angulaire constants des deux éléments, selon la configuration géométrique des segments d'engrènement portant les points de saut, de représenter n'importe quel profil de vitesse au niveau de l'autre élément. En d'autres termes, cette géométrie permet de garantir un type de profil de vitesse en escalier pour par exemple obtenir un tracé voulu de la courbe caractéristique d'un système pouvant être actionné avec un des deux éléments.

Il convient en outre de constater que dans ce mode de réalisation, les deux éléments effectuent un mouvement en sens opposé. Ceci peut par exemple être un avantage en termes d'encombrement dans les cas où il est nécessaire de ne prévoir qu'une petite course de déplacement et/ou de réglage.

Une autre solution ou addition est que les au moins deux segments d'engrènement d'au moins un élément se trouvent dans un plan sensiblement parallèle et sont courbés de manière discontinue l'un par rapport à l'autre, segment angulaire, par segment angulaire en sens inverse par rapport à l'axe de l'autre élément. Dans ce cas, les deux segments d'engrènement sont de préférence conçus de telle façon que les segments d'engrènement également prévus dans un plan forment un point de saut non différentiable au niveau des transitions d'un segment d'engrènement au segment d'engrènement adjacent.

Du fait que les segments d'engrènement placés à des écartements différents par rapport aux axes peuvent être disposés dans des plans parallèles, les segments correspondants étant également prévus dans des plans correspondants disposés parallèlement, on dispose d'une fonctionnalité correspondant au mode de réalisation décrit ci-dessus, à savoir, l'actionnement en continu d'un élément permettant de modifier la vitesse angulaire de l'autre élément.

Une disposition correspondante des plans d'engrènement différents des éléments offre la possibilité, en actionnant en continu un élément, de n'actionner l'autre élément que dans un segment angulaire déterminé, de sorte qu'il est possible, lors de la transition d'un plan d'engrènement disposé parallèlement au plan d'engrènement suivant, d'effectuer une inversion d'une courbure d'un plan, et donc de provoquer une inversion du sens de rotation d'un élément.

Il est en outre possible de combiner les deux modes de réalisation décrits. Ce qui peut par exemple être avantageux si la vitesse angulaire d'un des éléments doit être modifiée et/ou adaptée par petits incréments.

Le dispositif d'accouplement proposé dans les présentes permet ainsi de disposer de manière simple d'un système à actionner avec le dispositif d'accouplement à différentes vitesses angulaires et dans différents sens de rotation, et ce par un actionnement en continu d'un élément.

De manière avantageuse, au moins deux des segments d'engrènement à action réciproque présentent des dentures. On garantit ainsi de manière simple et économique un engrènement sûr et, de manière avantageuse, un glissement réduit entre deux éléments.

Les éléments montés sur des axes différents soient, au moins dans une zone partielle, guidés l'un par rapport au moyen d'au moins un dispositif de guidage, en particulier au moyen d'au moins une glissière.

Un dispositif de guidage permet par exemple de garantir dans une zone dans laquelle aucun des segments d'engrènement n'est en engrènement réciproque, un guidage correspondant des deux éléments l'un par rapport à l'autre, de sorte que les segments d'engrènement reviennent en contact l'un avec l'autre dans une position définie, et que l'on évite ainsi un coincement ou problème similaire.

De façon avantageuse, les éléments sont engrenés l'un à l'autre de façon mobile par un assemblage entre une clavette et un trou oblong et arqué pratiqué dans l'un des éléments. Un assemblage à trou oblong et clavette permet de déplacer les éléments l'un par rapport à l'autre selon un mouvement relatif souhaité. Il est par exemple possible, par guidage au moyen d'une glissière, de déplacer les éléments dans le trou oblong.

Un engrènement de ce type offre de plus la possibilité simple d'effectuer avec les axes stationnaires une sorte de mouvement basculant, dans lequel le sens de rotation des éléments basculants change par basculement d'un sens à l'autre. Dans ce cas, l'axe de l'élément basculant est en outre le centre circulaire du trou oblong alors conçue pour présenter une section circulaire ou annulaire.

Il est en outre avantageux que la clavette de l'assemblage à trou oblong et clavette soit l'axe d'un des éléments. Cela offre la possibilité de déplacer de manière simple dans l'un et l'autre sens, un des éléments au moyen d'un engrènement avec la glissière ainsi que le positionnement fixe de l'axe.

Dans un mode de réalisation avantageux, l'axe d'un premier élément est positionné entre l'axe d'un second et les segments d'engrènement du premier élément. Cela offre la possibilité de réduire au minimum l'encombrement d'un dispositif d'accouplement selon l'invention.

Il est en outre avantageux que le dispositif d'accouplement décrit ci-dessus soit utilisé dans un système de chauffage, ventilation et/ou climatisation d'un véhicule. Le dispositif d'accouplement décrit ci-dessus convient tout particulièrement à une utilisation dans un système de chauffage, ventilation et/ou climatisation d'un véhicule, du fait qu'il permet de répondre de manière simple aux exigences en termes de tracé de la courbe caractéristique et d'encombrement tout en offrant les avantages décrits ci-dessus d'un dispositif d'accouplement selon l'invention.

D'autres caractéristiques et avantages de l'invention apparaîtront à la lecture de la description ci-dessous présentée à titre d'exemple et non limitative en référence aux dessins joints. Sur les dessins :
La figure 1 est une vue d'un premier mode de réalisation d'un dispositif d'accouplement selon l'invention dans une position initiale des deux éléments l'un par rapport à l'autre définie arbitrairement.
La figure 2 est une vue arrière du dispositif d'accouplement de la figure 1 tourné de 180°.
La figure 3 montre le dispositif d'accouplement de la figure 1, les éléments ayant tourné de 60° par rapport à la position initiale définie.
La figure 4 est une vue arrière du dispositif d'accouplement de la figure 3.
La figure 5 montre le dispositif d'accouplement de la figure 1, les éléments ayant tourné de 120° par rapport à la position initiale définie.
La figure 6 est une vue arrière du dispositif d'accouplement de la figure 5.
La figure 7 montre le dispositif d'accouplement de la figure 1, les éléments ayant tourné de 180° par rapport à la position initiale définie.
La figure 8 est une vue arrière du dispositif d'accouplement de la figure 7.
La figure 9 montre le dispositif d'accouplement de la figure 1, les éléments ayant tourné de 240° par rapport à la position initiale définie.
La figure 10 est une vue arrière du dispositif d'accouplement de la figure 9.
La figure 11 montre le dispositif d'accouplement de la figure 1, les éléments ayant tourné de 300° par rapport à la position initiale définie.
La figure 12 est une vue arrière du dispositif d'accouplement de la figure 11.
La figure 13 présente un autre mode de réalisation du dispositif d'accouplement selon l'invention.

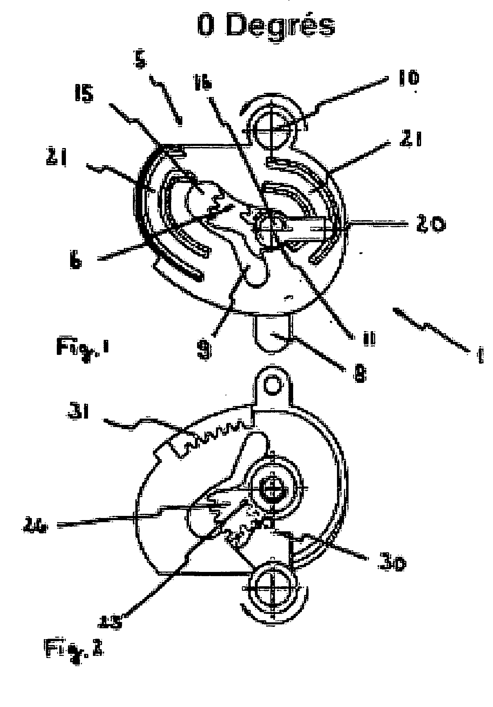

La figure 1 est une vue latérale d'un premier mode de réalisation d'un dispositif d'accouplement selon l'invention dans une position initiale des deux éléments l'un par rapport à l'autre définie arbitrairement.

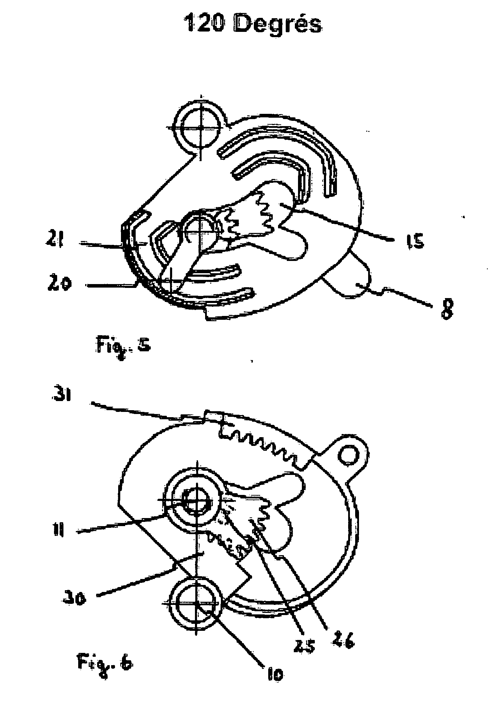

Les éléments 5, 6 présentent chacun un axe stationnaire 10, 11 qui peut par exemple être raccordé à un carter d'un conduit d'air non représenté sur la figure 5 d'un système de chauffage, ventilation et/ou climatisation d'un véhicule. Le premier élément 5 est en outre raccordé au niveau d'un bras 8 à un volet d'air également non représenté sur la figure 1, qui est actionné par le premier élément 5.

Sur le mode de réalisation présenté sur la figure 1, le premier élément 5 sert d'élément mené, qui est actionné par le deuxième élément 6, l'élément d'entraînement. Les sens de rotation des deux éléments sont indiqués par des flèches au niveau de chacun des axes 10, 11.

Les éléments 5, 6 sont en engrènement réciproque au moyen d'un assemblage à trou oblong et clavette, le premier élément 5 présentant un trou oblong 15 de forme courbe dans laquelle est guidée une clavette 16 qui coïncide avec l'axe 11 du deuxième élément 6. Au niveau du trou oblong 15 du premier élément est en outre prévu un autre évidement 9 sous forme de rainure, qui permet un engrènement de l'assemblage à trou oblong et clavette des deux éléments 5, 6 au moment du montage.

Les éléments 5, 6 sont en outre en engrènement au moyen d'une clavette 20 qui est prévue sur un bras de l'axe 11 du deuxième élément 6, et d'une glissière 21 en deux parties formée sur le premier élément 5. Cet engrènement doit garantir un positionnement défini des deux éléments 5, 6 pendant leur rotation.

La figure 2 est une vue arrière du dispositif d'accouplement de la figure 1 tourné de 180°.

On voit particulièrement bien sur la figure 2 les deux segments d'engrènement 25, 26 formés sur le deuxième élément 6 et les deux segments d'engrènement 30, 31 sur le premier élément 5. Les segments d'engrènement 25, 26, 30, 31 sont réalisés avec des dentures de formes complémentaires.

Les segments d'engrènement 25, 26, 30, 31 sont conçus par paires dans des plans différents et avec des rayons différents par rapport aux axes 10, 11. Comme on le voit sur la figure 1, une seule paire à la fois des segments d'engrènement 25, 26, 30, 31 se trouve en engrènement réciproque selon la position angulaire des éléments 5, 6 l'un par rapport à l'autre, l'engrènement n'étant prévu que sur une zone partielle de la rotation.

La première paire de segments d'engrènement à action réciproque, qui est représentée en engrènement sur les figures 1 et 2, entraîne ainsi une rotation des deux éléments en sens opposés. Le premier élément 5 bascule donc au niveau des axes stationnaires 10, 11, et actionne ainsi le volet d'air relié au niveau du bras 8.

Dans la zone d'une rotation dans laquelle aucune des deux paires de segments d'engrènement 25, 26, 30, 31 à action réciproque n'est en engrènement réciproque, la clavette 20 du deuxième élément 6 est guidée dans une des deux glissières 21, de sorte que les éléments 5, 6 sont guidés de façon définie même dans cette zone.

Du fait des rayons différents par paires des segments d'engrènement 25, 26, 30, 31, le premier élément 5 peut, à vitesse angulaire constante du deuxième élément 6, être actionné à des vitesses d'entraînement différentes selon le rayon des segments d'engrènement 25, 26, 30, 31.

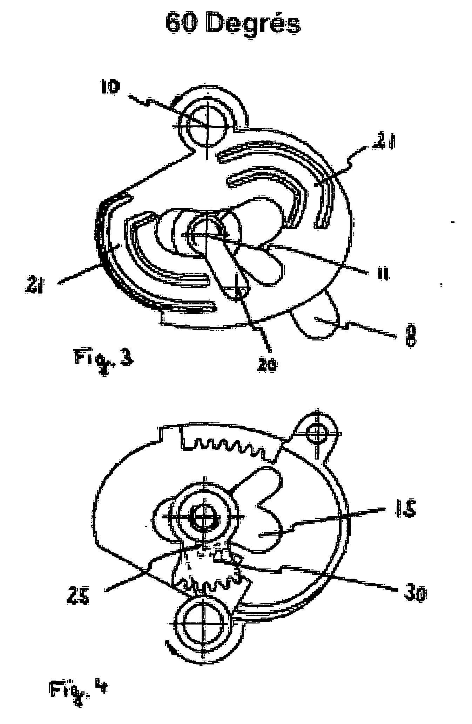

Les figures 3 et 4 montrent le dispositif d'accouplement de la figure 1, les éléments ayant tourné de 60° par rapport à la position initiale définie aux figures 1 et 2. Les sens de rotation des deux éléments 5, 6 sont à nouveau indiqués par des flèches au niveau de chacun des axes 10, 11.

Comme on le voit en pointillés sur les figures 3 et 4, les segments d'engrènement 25, 30 sont encore en engrènement réciproque. Les éléments 5, 6 ont été déplacés dans le trou oblong 15 par le mouvement de rotation par rapport aux illustrations des figures 1 et 2, de même que le volet d'air disposé au niveau du bras 8.

Comme on le voit sur la figure 3, la clavette 20 est sur le point d'être introduite dans la glissière 21 lorsque la rotation continue, et ceci au plus tard lorsque les segments d'engrènement 25, 30 se désolidarisent.

Les figures 5 et 6 montrent une vue arrière et une vue avant du dispositif d'accouplement 1 des figures précédentes, les éléments 5, 6 ayant tourné de 120° par rapport aux illustrations des figures 1 et 2.

Sur cette illustration, le premier élément 5 est arrivé au point d'inversion, et change de sens de rotation lorsque la rotation du deuxième élément 6 continue. Les éléments 5, 6 sont déplacés au maximum dans le trou oblong 15 et sont dans cette position encore tournés et positionnés l'un par rapport à l'autre par la clavette 20, qui est guidée dans la glissière 21. Le volet d'air disposé au niveau du bras 8 du premier élément 6 est également prévu pour être dans une position maximale ouverte ou fermée.

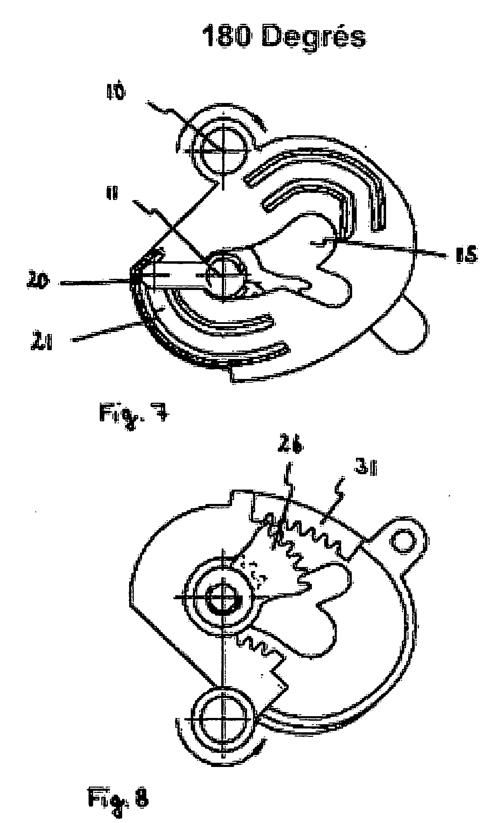

Les figures 7 et 8 montrent une vue arrière et une vue avant du dispositif d'accouplement 1 des figures précédentes, les éléments 5, 6 ayant tourné de 180° par rapport à la position initiale prédéfinie. Les sens de rotation des deux éléments 5, 6 sont à nouveau indiqués par des flèches au niveau de chacun des axes 10, 11, les éléments 5, 6 présentant maintenant le même sens de rotation.

Sur cette vue, les segments d'engrènement 26, 31 viennent juste de s'engrener. Lorsque le deuxième élément 6 continue à tourner, les éléments 5, 6 sont à nouveau déplacés dans le trou oblong 15, mais en sens opposé par rapport aux figures décrites ci-dessus. Comme on le voit sur la figure 8, la clavette 20 sort de la glissière 21 et le mouvement de rotation se fait exclusivement par les segments d'engrènement 26, 31, la vitesse angulaire étant inférieure à celle garantie par les segment d'engrènement 25, 30.

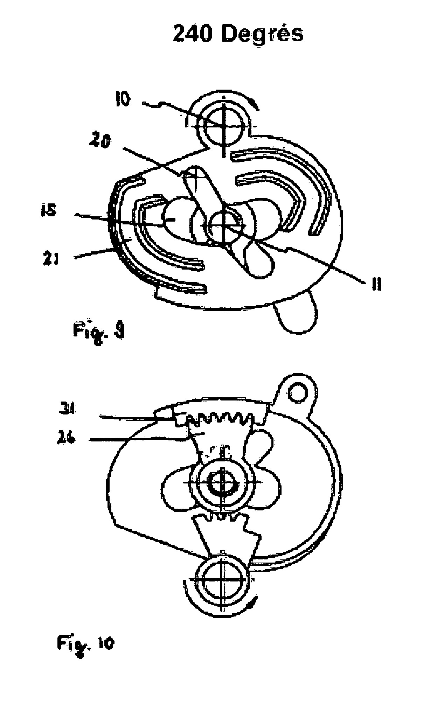

Les figures 9 et 10 sont des vues arrière et avant du dispositif d'accouplement 1 des figures précédentes, les éléments 5, 6 ayant tourné de 240° par rapport à la position initiale prédéfinie. Les sens de rotation des deux éléments 5, 6 sont à nouveau indiqués par des flèches au niveau de chacun des axes 10, 11.

Les éléments 5, 6 sont guidés par les segments d'engrènement 26, 31, la clavette 20 n'étant pas guidée par la glissière 21.

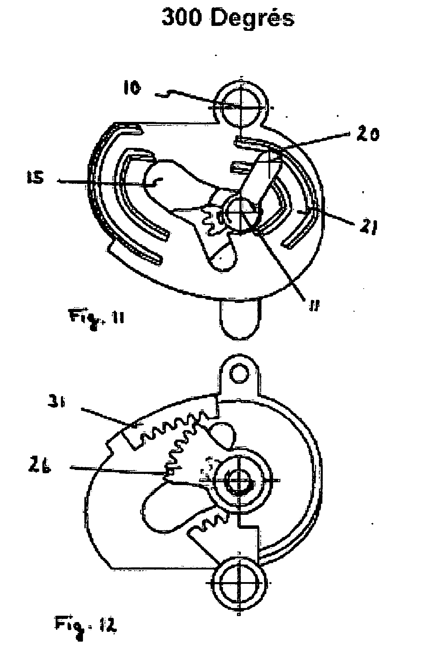

Les figures 11 et 12 sont des vues arrière et avant du dispositif d'accouplement 1 des figures précédentes, les éléments ayant tourné de 300° par rapport à la position initiale prédéfinie. Les éléments 5, 6 sont dans la deuxième position maximale, et positionnés à l'extrémité opposée du trou oblong 15 par rapport à l'illustration figures 5 et 6, et le volet d'air disposé au niveau du bras 8 se trouve donc également dans une position maximale.

Sur cette vue, la clavette 20 vient d'entrer dans la glissière 21 et les segments d'engrènement 26, 31 viennent de se désolidariser, de sorte que le guidage des deux éléments 5, 6 se fait par la glissière 21. Partant de l'illustration des figures 11 et 12, le deuxième élément 6 continue à tourner jusqu'à ce qu'on retrouve le positionnement montré sur les figures 1 et 2.

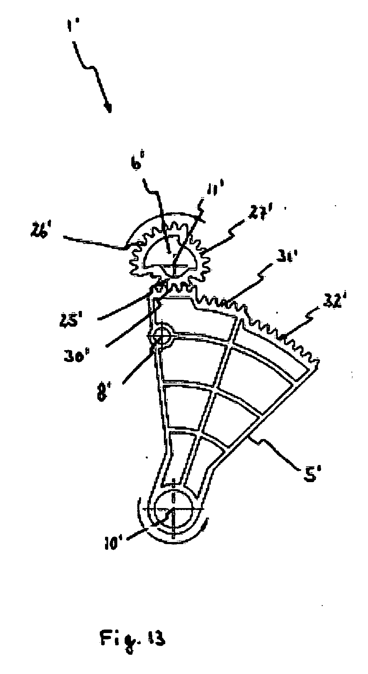

La figure 13 montre un autre mode de réalisation préféré du dispositif d'accouplement selon l'invention.

Le dispositif d'accouplement 1' présente également un premier élément 5' et un deuxième élément 6', le premier élément 5' étant à nouveau actionné en tant qu'élément mené par le deuxième élément 6'. Les éléments 5', 6' comprennent chacun trois segments d'engrènement 25', 26', 27', 30', 31', 32'.

Contrairement aux segments d'engrènement 25, 26, 30, 31 présentés sur les figures 1 à 12, les segments d'engrènement 25', 26', 27', 30', 31', 32' sont disposés dans un plan, mais conçus avec des épaulements ou points de saut au niveau des transitions des segments d'engrènement à action réciproque, de sorte qu'il se produit lors de la transition vers une paire à action réciproque adjacente un changement de la vitesse angulaire en forme de saut.

Les éléments 5', 6' présentent chacun un axe 10', 11'. Le sens de rotation est indiqué par les flèches au niveau des axes 10', 11'. Sur le premier élément 5' est prévu une possibilité de fixation 8' pour un volet d'air à actionner.

Selon la conception et les exigences de l'élément d'un système à actionner par l'élément d'accouplement 1, 1', il est également possible d'associer les deux modes de réalisation et/ou d'intégrer l'exemple de réalisation montré sur la figure 13 dans l'exemple de réalisation des figures 1 à 12, moyennant quoi on réalise toutes ou seulement quelques-unes des paires de segments d'engrènement 25, 26, 30, 31 correspondant à la configuration proposée sur la figure 13.

En résumé, on peut dire que le concept selon l'invention repose d'une part sur le fait qu'on propose un actionnement par des éléments agissant différemment. On garantit ainsi un engrènement inamovible des éléments même par des éléments se déplaçant différemment, d'autre part sur le fait qu'on garantit les vitesses angulaires différentes souhaitées avec des segments d'engrènement conçus en discontinu, pour répondre à un tracé souhaité de la courbe caractéristique et permettre une réaction optimale des systèmes à actionner.

Bien que la présente invention ait été décrite ci-dessus en référence aux modes de réalisation actuellement préférés, l'homme de l'art devrait se rendre compte que différentes possibilités de modification sont possibles dans le cadre des revendications jointes, sans diverger du concept selon l'invention et de la protection revendiquée, et qu'en particulier, il est possible d'adapter les segments d'engrènement au tracé de la courbe caractéristique propre à un système à actionner, aussi bien par une géométrie différente de celle des surfaces d'engrènement proposées dans les présentes, qu'en prévoyant d'autres surfaces d'engrènement.

## Revendications

1. Dispositif d'accouplement (1 ; 1'), en particulier pour des moyens de régulation d'un système de chauffage, ventilation et/ou climatisation d'un véhicule, comportant au moins deux éléments (5, 6 ; 5', 6') montés sur des axes différents (10, 11 ; 10', 11'), chaque élément présente au moins un segment d'engrènement (25, 26, 30, 31 ; 25', 26' 27', 30', 31' 32') prévu pour un engrènement alterné, **dans lequel** les éléments (5, 6 ; 5', 6') présentent chacun au moins un autre segment d'engrènement (25, 26, 30, 31 ; 25', 26' 27', 30', 31' 32') prévu pour un engrènement alterné, au moins deux segments d'engrènement (25, 26, 30, 31 ; 25', 26' 27', 30', 31' 32') d'au moins un élément (5, 6 ; 5', 6'), se trouvant sensiblement dans un plan, présentant chacun, segment angulaire par segment angulaire l'un par rapport à l'autre, des écartements constants par rapport à l'axe (10, 11 ; 10', 11') de l'élément (5, 6 ; 5', 6') et/ou se trouvant sensiblement dans des plans parallèles, courbés et discontinus, segment angulaire par segment angulaire l'un par rapport à l'autre, en sens opposé par rapport à l'axe (10, 11 ; 10', 11') de l'autre élément (5, 6 ; 5', 6'), pour modifier à vitesse angulaire constante d'un des éléments (5, 6 ; 5', 6') le sens de rotation et/ou la vitesse angulaire de l'autre élément (5, 6 ; 5', 6') ,**caractérisé en ce que** les éléments (5, 6 ; 5', 6') montés sur des axes différents sont au moins dans une zone partielle dans laquelle aucun des segments d'engrènement n'est en engrènement réciproque, guidés l'un par rapport à l'autre, au moyen d'au moins une glissière (21).

2. Dispositif d'accouplement (1 ; 1') selon la revendication 1, **caractérisé en ce qu'**au moins une paire de segments d'engrènement à action réciproque (25, 26, 30, 31 ; 25', 26' 27', 30', 31' 32') présente des dentures,

3. Dispositif d'accouplement (1 ; 1') selon la revendication 1 ou 2, **caractérisé en ce que** les éléments (5, 6 ; 5', 6') sont en engrènement réciproque de manière mobile par un assemblage à trou oblong et clavette (15, 16).

4. Dispositif d'accouplement (1 ; 1') selon la revendication 3, **caractérisé en ce que** la clavette (16) est confondue avec l'axe (10, 11 ; 10', 11') d'un élément (5, 6 ; 5', 6').

5. Dispositif d'accouplement (1 ; 1') selon une des revendications 1 à 4 , **caractérisé en ce que** l'axe (10, 11 ; 10', 11') d'un premier élément (5, 6 ; 5', 6') est positionné entre l'axe d'un second élément(10, 11 ; 10', 11') et les segments d'engrènement du premier élément (5, 6 ; 5', 6').

6. Utilisation du dispositif d'accouplement (1 ; 1') selon une des revendications 1 à 5 sur un système de chauffage, ventilation et/ou climatisation.

## Claims

1. Coupling device (1; 1'), in particular for means for regulating a heating, ventilation and/or air-conditioning system of a vehicle, comprising at least two elements (5, 6; 5', 6') mounted on different shafts (10, 11; 10', 11'), each element having at least one engagement segment (25, 26, 30, 31; 25', 26', 27', 30', 31', 32') intended for an alternating engagement, in which device the elements (5, 6; 5', 6') each have at least one other engagement segment (25, 26, 30, 31; 25', 26', 27', 30', 31', 32') intended for an alternating engagement, at least two engagement segments (25, 26, 30, 31; 25', 26', 27', 30', 31', 32') of at least one element (5, 6; 5', 6'), which are situated substantially in one plane, each having, angular segment by angular segment with respect to one another, constant spacings with respect to the shaft (10, 11; 10', 11') of the element (5, 6; 5', 6') and/or being substantially situated in curved and discontinuous parallel planes, angular segment by angular segment with respect to one another, in the opposite direction with respect to the shaft (10, 11; 10', 11') of the other element (5, 6; 5', 6'), in order to modify, at a constant angular speed of one of the elements (5, 6; 5', 6'), the direction of rotation and/or the angular speed of the other element (5, 6; 5', 6'), **characterized in that** the elements (5, 6; 5', 6') mounted on different shafts are, at least in a partial region in which none of the engagement segments is in reciprocal engagement, guided with respect to one another by means of at least one guideway (21).

2. Coupling device (1; 1') according to Claim 1, **characterized in that** at least one pair of reciprocally acting engagement segments (25, 26, 30, 31; 25', 26', 27', 30', 31', 32') has sets of teeth.

3. Coupling device (1; 1') according to Claim 1 or 2, **characterized in that** the elements (5, 6; 5', 6') are in reciprocal engagement in a movable manner via an oblong hole/pin assembly (15, 16).

4. Coupling device (1; 1') according to Claim 3, **characterized in that** the pin (16) is coincident with the shaft (10, 11; 10', 11') of an element (5, 6; 5', 6').

5. Coupling device (1; 1') according to one of Claims 1 to 4, **characterized in that** the shaft (10, 11; 10', 11') of a first element (5, 6; 5', 6') is positioned between the shaft of a second element (10, 11; 10', 11') and the engagement segments of the first element (5, 6; 5', 6').

6. Use of the coupling device (1; 1') according to one of Claims 1 to 5 in a heating, ventilation and/or air-conditioning system.

## Patentansprüche

1. Kupplungsvorrichtung (1; 1'), insbesondere für Regulierungseinrichtungen einer Heizungs-, Lüftungs- und/oder Klimaanlage eines Fahrzeugs, die mindestens zwei Elemente (5, 6; 5', 6') aufweist, die auf verschiedene Achsen (10, 11; 10', 11') montiert sind, wobei jedes Element mindestens ein Eingriffssegment (25, 26, 30, 31; 25', 26', 27', 30', 31', 32') aufweist, das für einen abwechselnden Eingriff vorgesehen ist, wobei die Elemente (5, 6; 5', 6') je mindestens ein weiteres Eingriffssegment (25, 26, 30, 31; 25', 26', 27', 30', 31', 32') aufweisen, das für einen abwechselnden Eingriff vorgesehen ist, wobei mindestens zwei Eingriffssegmente (25, 26, 30, 31; 25', 26', 27', 30', 31', 32') mindestens eines Elements (5, 6; 5', 6'), die sich im Wesentlichen in einer Ebene befinden, jeweils Winkelsegment für Winkelsegment zueinander konstante Abstände bezüglich der Achse (10, 11; 10', 11') des Elements (5, 6; 5', 6') aufweisen und/oder sich im Wesentlichen in parallelen, gekrümmten und unterbrochenen Ebenen, Winkelsegment für Winkelsegment zueinander, in Gegenrichtung bezüglich der Achse (10, 11; 10', 11') des anderen Elements (5, 6; 5', 6') befinden, um bei konstanter Winkelgeschwindigkeit eines der Elemente (5, 6; 5', 6') die Drehrichtung und/oder die Winkelgeschwindigkeit des anderen Elements (5, 6; 5', 6') zu verändern, **dadurch gekennzeichnet, dass** die auf verschiedene Achsen montierten Elemente (5, 6; 5', 6') mindestens in einem Teilbereich, in dem keines der Eingriffssegmente in gegenseitigem Eingriff ist, mittels einer Gleitschiene (21) eins bezüglich des anderen geführt werden.

2. Kupplungsvorrichtung (1; 1') nach Anspruch 1, **dadurch gekennzeichnet, dass** mindestens ein Paar von Eingriffssegmenten mit gegenseitiger Einwirkung (25, 26, 30, 31; 25', 26', 27', 30', 31', 32') Verzahnungen aufweist.

3. Kupplungsvorrichtung (1; 1') nach Anspruch 1 oder 2, **dadurch gekennzeichnet, dass** die Elemente (5, 6; 5', 6') durch einen Zusammenbau mit Langloch und Keil (15, 16) beweglich in gegenseitigem Eingriff stehen.

4. Kupplungsvorrichtung (1; 1') nach Anspruch 3, **dadurch gekennzeichnet, dass** der Keil (16) mit der Achse (10, 11; 10', 11') eines Elements (5, 6; 5', 6') zusammenfällt.

5. Kupplungsvorrichtung (1; 1') nach einem der Ansprüche 1 bis 4, **dadurch gekennzeichnet, dass** die Achse (10, 11; 10', 11') eines ersten Elements (3, 6; 3', 6') zwischen der Achse eines zweiten Elements (10, 11; 10', 11') und den Eingriffssegmenten des ersten Elements (5, 6; 5', 6') positioniert ist.

6. Verwendung der Kupplungsvorrichtung (1; 1') nach einem der Ansprüche 1 bis 5 bei einer Heizungs-, Lüftungs- und/oder Klimaanlage.
